# EUROPEAN PATENT SPECIFICATION

(11) **EP 3 372 428 B1**
(45) Date of publication and mention of the grant of the patent: **07.04.2021**
(21) Application number: 17160081.0
(22) Date of filing: 09.03.2017
(51) Int. Cl.: B60H 1/34

(54) **INTERNAL AIR VENT FOR VEHICLES**
LUFTAUSTRITT FÜR FAHRZEUGE
AÉRATEUR POUR VÉHICULES

(43) Date of publication of application: 12.09.2018
(73) Proprietor: Volvo Car Corporation, 405 31 Göteborg (SE); Dr. Schneider Kunststoffwerke GmbH, 96317 Kronach-Neuses (DE)
(72) Inventor: GÖTHLIN, Jonas, 423 43 TORSLANDA (SE); KAMM, Daniel, 96264 ALTENKUNSTADT (DE)
(74) Representative: AWA Sweden AB

(56) References cited:
- EP-A1- 3 366 503
- WO-A1-2016/075111
- JP-A- 2009 132 262
- JP-A- 2013 112 256

## Description

### TECHNICAL FIELD OF THE INVENTION

The present invention relates to an internal air vent for a vehicle, such as a car, and more specifically to a new floating type internal air vent.

### BACKGROUND

In automotive industry, indoor space, and especially instrument panel space is at a premium. Various knobs, control mechanisms and air vents for the indoor environment as well as entertainment system(s) and their screens need to coexist and/or share space with safety system such as air bags or the like which may require a large amount of space on the instrument panel. Further, it may be difficult to mount other types of devices on the outside of the safety system(s) due to the risk of those devices being ejected and/or colliding with occupants in the vehicle in the event of a crash or collision. Since the mentioned devices may be stiff, hard or even sharp this may not be acceptable. In summary, there is a need to reduce the space required for all types of knobs, control mechanisms and air vents for the indoor environment as well as entertainment system(s) and their screens.

In order to reduce the size of an air vent and their thereto related control knobs and control mechanisms, an operation knob for controlling the direction of the air from upstream fins may be mounted on a downstream fin as disclosed in US patent applications 2014/0120826 and 2012/0291893. Such solutions, however, leads to a large number of parts and a complex design, as well as a plurality of components which are placed in the air flow, thereby forming obstructions in the air flow.

Further, in relation to air vents as well as the automotive industry in general, there is a desire and need to improve the air flow from air vents, as well as reducing costs and assembly and/or installation time with regard to the air vent, as well as other components of the vehicle.

There is thus a need for improving the state of the art to provide a new and improved air vent.

JP2009132262 (A) discloses that a retainer is formed in a cylindrical shape and a downstream end of a wind passage inside the retainer is formed in a rectangular shape to be an outlet. A downstream fin is formed by a plate-like body extending in a direction along a first side (right-and-left direction) of the outlet. The fin is arranged near the outlet and is possible to rotate around a shaft as a fulcrum. An upstream fin is formed by a plate-like body extending in a direction along a second side (a direction perpendicular to the drawing paper) of the outlet. The fin is arranged upstream of the downstream fin inside the retainer and is possible to rotate around a shaft as a fulcrum. The downstream fin is made to be an operating portion to be operated by person(s) aboard and is attached to the retainer so as to be movable in the direction along the first side. In addition, between both of the fins, a moving direction converting mechanism is provided for converting a linear movement of the downstream fin in the direction along the first side into a rotational movement of the upstream fin around the shaft as the fulcrum.

In JP2013112256 (A), a register for air conditioning includes a case, an annular fin (fin part), upstream side fins, an operation knob, a driving gear, and a driven gear. In the case, an internal space is set as a ventilation path for air-conditioning air. Among directions orthogonal to the ventilation direction of the air-conditioning air in the ventilation path, one (car width direction) of the two directions orthogonal to each other is set as a first direction, and the other (vertical direction) is set as a second direction. The register for air conditioning includes a gear spindle (shaft) disposed coaxially to a fin spindle (shaft) in the annular fin (fin part) to support the driving gear, and a tilting regulation part for regulating tilting of the driving gear around the gear shaft (shaft) in the second direction (vertical direction).

EP3366503 (A1), which falls under Art. 54(3) EPC, discloses an air vent which has a plurality of first air guide elements, which are coupled via a driver and which are pivotably mounted about axes which run in parallel. The air vent also has a frame-shaped second air guide element, the second air guide element being connected to the outer first air guide elements in each case via a ball joint.

### SUMMARY OF THE INVENTION

It is an object of the present invention to improve the current state of the art by providing an internal air vent which alleviates all or at least some of the above-discussed problems. The term internal air vent may also be knowns as air louver, dashboard vent, or the like.

This object is achieved by an internal air vent and a method for assembling an internal air vent as defined in the appended claims.

According to an aspect of the present invention, there is provided an internal air vent for a vehicle according to claim 1. The internal air vent comprises a frame defining an air outlet, in which the frame has a back end connectable to a ventilation system for receiving an air stream and a front end for releasing the air stream into the vehicle. Further, the internal air vent comprises at least one back vane arranged in the frame, where each back vane is pivotally connected to the frame in order to redirect the air stream in a first plane. The internal air vent also comprises a linkage structure connected to the at least one back vane and a front vane unit arranged in front of the at least one back vane, wherein the front vane unit is pivotally connected to, and supported by, the linkage structure in order to redirect the air stream in a second plane which is perpendicular to the first plane. Moreover, the front vane unit is slidable along a sliding direction which is perpendicular to the second plane, and wherein the linkage structure is configured to transfer a sliding motion of the front vane unit along the sliding direction to a pivoting motion of the at least one back vane thereby controlling the redirection of air in the first plane.

Hereby, a simple, cost effective and more efficient air vent which is easy to assemble and install, is provided. The inventive air vent presents a hidden axis concept where the front vane unit is directly coupled to the back vane(s) via the linkage structure, the interface between the linkage and the front vane unit forming the hidden axis. Accordingly, any obstructing components or parts, such as bars or rods forming the rotational axis for the front vane unit are avoided, thereby improving the air flow efficiency.

The front vane unit may comprise one single vane blade (may also be referred to as fins), or a plurality of vane blades. In more detail, regarding the latter option, the front vane unit may comprise two or more vane blades which are connected to each other so to form a front vane frame (may also be referred to as an annular fin). Stated differently, the front vane unit may be in the form of a front vane frame. However, in other embodiments, the two or more vanes may be separate vanes/blades, each of which is pivotally connected to, and supported by, the linkage structure. Also, a back vane is to be construed as a vane blade or fin positioned behind the front vane unit, i.e. closer to the back end of the frame than the front vane unit.

The present invention is based on the realization that control knobs and other control mechanisms associated with conventional internal air vents for vehicles often require relatively large amounts of space on e.g. the instrument panel or other internal surfaces within the vehicle. Since space generally is a sparse resource in the automotive industry, the present inventors realized that by linking the front vane unit to the back vane arrangement via a suitable linkage structure in order to enable pivoting control of the back vane(s) from the front vane unit, the space required for the internal air vent is reduced. Moreover, the present inventors realized that by utilizing the linkage structure as a supporting body for the front vane unit, the number of structural parts and accordingly the number of potential obstructions in the air flow can be reduced, which not only increases the efficiency of the air vent in terms of air flow output, but also reduces costs and the associated workload during assembly.

In more detail, it can be said that the back vane(s) acts/act as a type of foundation or support for the front vane unit via the linkage structure since the one or more back vanes are pivotally/rotationally mounted to the frame of the inventive air vent. Consequently, the need for the front vane unit to be mounted to and supported by the frame is diminished, whereby any potential structural bodies related to the interface between the frame and the front vane unit, which would at the very least act as obstructions in the air flow path, are avoided. Obstructions in the air flow path are detrimental to the performance of an air vent, as the amount of air, or the speed and thus directionality of the air ejected from the air vent may be reduced by obstructions.

Furthermore, and as stated above, the inventive air vent includes fewer parts than conventional and prior known internal air vents since there is no need for additional control mechanisms for the back vane(s). The low number of parts results in that the internal air vent can be made at a lower cost, with fewer steps during assembly, and as such may be cheaper to manufacture and easier to install than previously known before.

The redirection of the air stream should be understood as the redirection of the air stream which is released at the front end of the frame into the vehicle. Also, a plane is perpendicular to another plane when it has a line that is perpendicular to the other plane, and when two planes are perpendicular to the same line, they are parallel planes.

The term "in front of" is to be understood as that the front vane unit is arranged closer to the front end portion of the frame than the one or more back vanes. In more detail, the at least one back vane should be interpreted as being placed further back, as in being arranged towards the back end of the frame, whereas the front vane unit (comprising one or more front vane blades) is placed in front of the at least one back vane towards the front end of the frame which front end, in use, release the air stream into the vehicle. Pivotally or pivotably connected is to be understood as that a first element is connected to a second element such that the first element can be pivoted about an axis relative to the second element or vice versa (the second element can be pivoted relative to the first element). The front vane unit and the back vane(s) redirect the air stream within the frame of the internal air vent by pivoting about a corresponding rotational axis relative to the frame. Accordingly, in an embodiment of the first aspect of the present invention, the front vane unit is arranged to pivot around/about a rotational axis, where the rotational axis has an extension perpendicular to said second plane.

Further, the expression that the at least one back vane may be pivoted to redirect the air stream in a first plane means that by pivoting the at least one back vane, the direction of the air stream in the first plane is changed. That the front vane unit may be pivoted to redirect the air stream in a second plane, means that by pivoting the front vane unit, the direction of the air stream in the second plane is changed.

In an embodiment the frame of the internal air vent is an elongated structure (e.g. rectangular or elliptic from a front view perspective). Thus, the first plane may be parallel with a plane spanned by a longitudinal axis or elongated axis of the internal air vent and a central axis extending through the air vent in the general direction of the air stream (i.e. from the back end to the front end). The second plane may accordingly be perpendicular to the longitudinal axis of the internal air vent. The first and second plane are substantially perpendicular to each other, thereby the at least one back vane may control the redirection of the air stream in e.g. a vertical direction and the two front vanes may control the redirection of the air stream in e.g. a horizontal direction. Hence, a sliding motion in the sliding direction, which is perpendicular to the second plane, may be interpreted as a vertical sliding motion, or a longitudinal sliding motion within the frame. The terms, vertical and horizontal are construed under the assumption that the internal air vent is arranged in an "upright position" in which the longitudinal axis of the elongated frame extends along a vertical direction. For example, the elongated frame may have an aspect ratio in the range of 1:1.5-10 (width:height).

It should be noted that the terms horizontally and vertically when referring to the direction in which the air stream is ejected from the air vent, is to be interpreted as a substantially horizontal and substantially vertical direction, respectively. Further, the term perpendicular when referring to the first plane, second plane and rotational axis is to be interpreted as substantially perpendicular. For example, a deviation of ±10% from a horizontal or vertical direction should be interpreted as being part of the term "substantially horizontally" or "substantially vertically", respectively. A deviation of ±10%, e.g. ± 1-10 degrees, should also be interpreted as being part of the term "substantially perpendicular". Further, the terms horizontally and vertically should be interpreted as corresponding to a specific alignment of the internal air vent. The terms may be used interchangeably depending on how the internal air vent is arranged in a vehicle.

The at least one back vane being pivotally connected to the frame does not exclude the possibility of the at least one back vane being slidably connected to the frame. In at least one embodiment, the at least one back vane is un-slidably/non-slidably connected to the frame.

In an embodiment of the first aspect of the present invention, the front vane unit comprises two front vanes which form an opening for the air stream. In other words, the two front vanes are spaced apart, and form an opening for the air stream between the two front vanes. The opening between the two front vanes may be interpreted as an additional opening, the air stream may also be able to pass between at least one of the two front vanes and the frame.

Further, in another embodiment of the first aspect of the present invention, the front vane unit is connected to the linkage structure via two connection flanges which are connected to opposite ends of the front vane unit, wherein each of the two connection flanges couple to the front vane unit at a connection point, the two connection points defining the rotational axis. The term "defines the rotational axis" should be understood that the two connection points are arranged such that an imaginary straight line extending through the two connection points defines the rotational axis about which the front vane unit is pivotable.

Even further, in accordance with another embodiment of the first aspect of the present invention, the front vane unit has two receiving portions for receiving the two connection flanges of the linkage structure,
wherein at least one of the receiving portions comprises a blocking structure in order to limit a pivoting motion (of the front vane unit) around the rotational axis.

In more detail, it can be the that the front vane unit has a first pivot end position and a second pivot end position, the first and second pivot end positions being opposite each other and defined by the blocking structure. A pivot end position should be interpreted as the maximum possible rotation or pivot of the front vane unit within the frame.

Preferably, the front vane unit is arranged so that it is not in contact with an inner wall of the frame at any pivot end position. Stated differently, the front vane unit has a clearance between any portion of the front vane unit and the inner walls of the frame at any position of the front vane unit. This is advantageous in order to maintain control of the redirection of the air stream in the first plane (by means of the back vanes) while the front vane unit is in one of its pivot end positions. It has been realized by the inventors that if the front vane unit is dimensioned to abut against the inner walls of the frame in order to limit a pivoting motion around the rotational axis, the air deflection capability of the internal air vent is impaired. Thus, by having the blocking structure defining a limit for the pivoting motion around the rotational axis of the front vane unit, functionality is improved.

Naturally, the structural definitions are analogously interchangeable, i.e. the connection flanges may have a receiving portion for receiving a respective connecting portion of the front vane unit, and accordingly, the receiving portions of the connection flanges may comprise blocking structures to limit a pivoting motion of the front vane unit around the rotational axis.

Further, in yet another embodiment of the first aspect of the present invention, at least one of the receiving portions comprises a pivot pin arranged to be received in a corresponding opening in the connection flanges. However, the coupling arrangement (i.e. the pivot pin) may be interchanged between the two structures, such that, at least one of the receiving portions of the front vane unit comprises an opening adapted to receive a corresponding pivot pin of the connection flanges.

Even further, and in accordance with the first aspect of the present invention, the internal air vent comprises a plurality of back vanes, and where the back vanes are connected by the link mechanism. In other words, the link mechanism connects the back vanes to each other. Connecting each of the back vanes via the link mechanism means that each of the back vanes may be controlled simultaneously. Further, no additional part or component may be needed to connect the link mechanism to the back vanes. The air vent may comprise at least two back vanes, at least four back vanes or at least six back vanes. Preferably, the internal air vent comprises an even number of air vents which are symmetrically positioned within the frame relative to a central plane. The central plane is to be understood as a plane parallel to the second plane which "divides" the internal air vent in two approximately equal halfportions (e.g. a top half portion and a bottom half portion).

Moreover in accordance with yet another embodiment of the first aspect of the present invention, , one or more of the back vanes have a first edge facing towards the front vane unit, and where the first edge has a concave portion. Hereby, the back vanes may advantageously be made longer (i.e. have a longer extension from the back towards the front) which increases air flow directivity, without obstructing the pivoting motion of the front vane unit.

According to the first aspect of the present invention, the internal air vent further comprises an air flow rate control member arranged to protrude from the front vane unit away from the the at least one back vane, wherein the air flow rate control member is movable to control a flow rate of the air stream being ejected from the internal air vent. By arranging the air flow rate control member such that it protrudes in front of the front vane unit, less space is required on the instrument panel for such a control knob. The air flow rate control member may protrude through the opening for the air stream, e.g. between two front vane blades, and thus be located in front of and/or between the two front vane blade. The air flow rate control member may be mounted on the two front vane blades. The air flow rate control member may be connected via an air flow rate connection member to a valve inside the ventilation system for controlling the flow rate of the air stream. An advantage with the present invention is that the internal air vent may be provided as a single package which is to be mounted in the vehicle, which may require few operations to install.

According to a second aspect of the present invention, there is provided a method for assembling an internal air vent for a vehicle. The method comprises providing a frame which defines an air outlet, where the frame has a back end connectable to a ventilation system for receiving an air stream and a front end for releasing the air stream into the vehicle, and arranging at least one back vane in the frame, and pivotally connecting the at least one back vane to the frame. Further, the method comprises connecting a linkage structure to the at least one back vane, arranging a front vane unit within the frame in front of the at least one back vane, and connecting the front vane unit pivotally to the linkage structure, such that the front vane unit is supported within the frame by the linkage structure and such that the linkage structure transfers a sliding motion of the front vane unit to a pivoting motion of the at least one back vane. The internal air vent further comprises an air flow rate control member arranged to protrude from the front vane unit away from the at least one back vane, wherein said air flow rate control member is movable to control a flow rate of the air stream being ejected from the internal air vent.

With this aspect of the invention, similar advantages and preferred features are present as in the previously discussed first aspect of the invention.

According to another aspect of the present invention, there is provided an internal air vent for a vehicle according to claim 10, comprising: a frame defining an air outlet said frame having a back end connectable to a ventilation system for receiving an air stream and a front end for releasing the air stream into the vehicle; at least one back vane arranged in the frame, each back vane being pivotally connected to the frame in order to redirect the air stream in a first plane; a linkage structure connected to the at least one back vane; a front vane unit arranged in front of said at least one back vane, wherein the front vane unit is pivotally connected to and supported by the linkage structure in order to redirect the air stream in a second plane which is perpendicular to the first plane; and wherein the front vane unit is slidable along a sliding direction which is perpendicular to said second plane, and wherein the linkage structure is configured to transfer a sliding motion of the front vane unit along the sliding direction to a pivoting motion of the at least one back vane thereby controlling the redirection of air in the first plane, wherein said front vane unit is arranged to pivot around a rotational axis, said rotational axis having an extension perpendicular to said second plane, wherein said front vane unit is connected to said linkage structure via two connection flanges of the linkage structure which are connected to opposite ends of said front vane unit along said rotational axis, wherein each of the two connection flanges couple to the front vane unit at a connection point, the two connection points defining said rotational axis, wherein said front vane unit has two receiving portions for receiving said two connection flanges of said linkage structure, and wherein at least one of said receiving portions comprises a blocking structure in order to limit a pivoting motion around said rotational axis.

According to yet another aspect of the present invention, there is provided a method for assembling an internal air vent for a vehicle, said method comprising: providing a frame which defines an air outlet, said frame having a back end connectable to a ventilation system for receiving an air stream and a front end for releasing the air stream into the vehicle; arranging at least one back vane in the frame, and pivotally connecting said at least one back vane to the frame; connecting a linkage structure to the at least one back vane; arranging a front vane unit within the frame in front of the at least one back vane, and connecting the front vane unit pivotally to the linkage structure, such that the front vane unit is supported within the frame by the linkage structure and such that the linkage structure transfers a sliding motion of the front vane unit to a pivoting motion of said at least one back vane, wherein said front vane unit is arranged to pivot around a rotational axis, said rotational axis having an extension perpendicular to a plane, wherein said front vane unit is connected to said linkage structure via two connection flanges of the linkage structure which are connected to opposite ends of said front vane unit along said rotational axis, wherein each of the two connection flanges couple to the front vane unit at a connection point, the two connection points defining said rotational axis, wherein said front vane unit has two receiving portions for receiving said two connection flanges of said linkage structure, and wherein at least one of said receiving portions comprises a blocking structure in order to limit a pivoting motion around said rotational axis.

These and other features of the present invention will in the following be further clarified with reference to the embodiments described hereinafter.

### BRIEF DESCRIPTION OF THE DRAWINGS

For exemplifying purposes, the invention will be described in closer detail in the following with reference to embodiments thereof illustrated in the attached drawings, wherein:
Fig. 1 illustrates a perspective view of an internal air vent in accordance with an embodiment of the invention;
Fig. 2 illustrates a partly exploded perspective view of an internal air vent in accordance with an embodiment of the invention;
Fig. 3 illustrates a perspective view of some selected parts of an internal air vent in accordance with an embodiment of the present invention;
Fig. 4 illustrates three schematic cross-sectional side views of an internal air vent in accordance with an embodiment of the present invention;
Fig. 5 illustrates three schematic cross-sectional top view of an internal air vent in accordance with an embodiment of the present invention;
Fig. 6 illustrates a flow chart representation of a method for assembling an internal air vent for a vehicle in accordance with an embodiment of the present invention.

### DETAILED DESCRIPTION

In the following detailed description, preferred embodiments of the present invention will be described. However, it is to be understood that features of the different embodiments are exchangeable between the embodiments and may be combined in different ways, unless anything else is specifically indicated. Even though in the following description, numerous specific details are set forth to provide a more thorough understanding of the present invention, it will be apparent to one skilled in the art that the present invention may be practiced without these specific details. In other instances, well known constructions or functions are not described in detail, so as not to obscure the present invention.

The following description may use terms such as "horizontal", "vertical", "lateral", "back and forth", "up and down", "back and front", "upper", "lower", "back", "forward", "front", "rear", etc. These terms generally refer to the views and orientations as shown in the drawings and that are associated with a normal use of the invention. Hence, an internal air vent according to the present invention mounted on the dashboard of a vehicle may have a "back" end which faces in a forward direction of the vehicle, and the "front" end of such an internal air vent may be facing the inside of cabin, e.g. towards the "rear" of the vehicle. The terms are used for the sake of convenience only and shall not be limiting.

Furthermore, the terms pivot, pivotably, pivotally or pivoting should be interpreted as being able to rotate or being rotatable around a rotational axis. The terms slide,slidably and sliding should be interpreted as a translational motion mainly along a straight line. The sliding motion may be along or in parallel to a rotational axis of e.g. the front vane unit.

An internal air vent 1 according to the present invention is suitable for being installed internally in a vehicle, such as a car, bus, truck, cab on a construction machine or a similar type of vehicle. When a flow of air from the ventilation system, e.g. an air conditioning system, reaches the internal air vent 1 the flow of air may be directed by either pivoting the front vane unit 7, or by sliding the front vane unit 7 within the frame 2. The sliding motion of the front vane unit 7 is connected by a link mechanism 6 (linkage structure) to the back vanes 5 of the air vent in order to pivot the back vanes 5. The frame 2 defines the air outlet of the air vent. Note that there are no knobs or other types of control element placed outside and spaced apart from the frame 2, or on the frame 2 of the air vent 1, for controlling the direction of the air. The direction of air may be solely controlled by pivoting and/or sliding the front vane unit 7. According to aspects of the present invention, the amount of air which is ejected from the air vent 1 is also controlled by operating an air flow rate control member 8 positioned in front of the front vane unit. Moreover, the internal air vent 1 of the present invention has a front vane unit which appears to be floating since the rotational axis 101 of the front vane unit 1 is "hidden", which results in that the front vane unit appears to float in the air which not only increases the efficiency of the air vent 1 due to the lack of obstructions in the air flow path, but also results in an aesthetically pleasing appearance. The aesthetic appearance of different components on the instrument panel is a well-known decider for a customer buying a car. Therefore, an improved appearance with less visual clutter, making it more user friendly and intuitive for occupants, may also be beneficial.

Accordingly, in use, the internal air vent receives an air stream at the back end 3, and the air flow rate control member 8 may be used by an occupant in the vehicle to control the air flow rate and adapt the amount and/or speed of the air stream to a desired level. The front vane unit 7 may be pivoted by an occupant to direct the air stream in a 'horizontal' direction, and the front vane unit 7 may be slid in the frame, e.g. up or down, to direct the air stream in a 'vertical' direction (due to the pivoting motion of the back vanes 5).

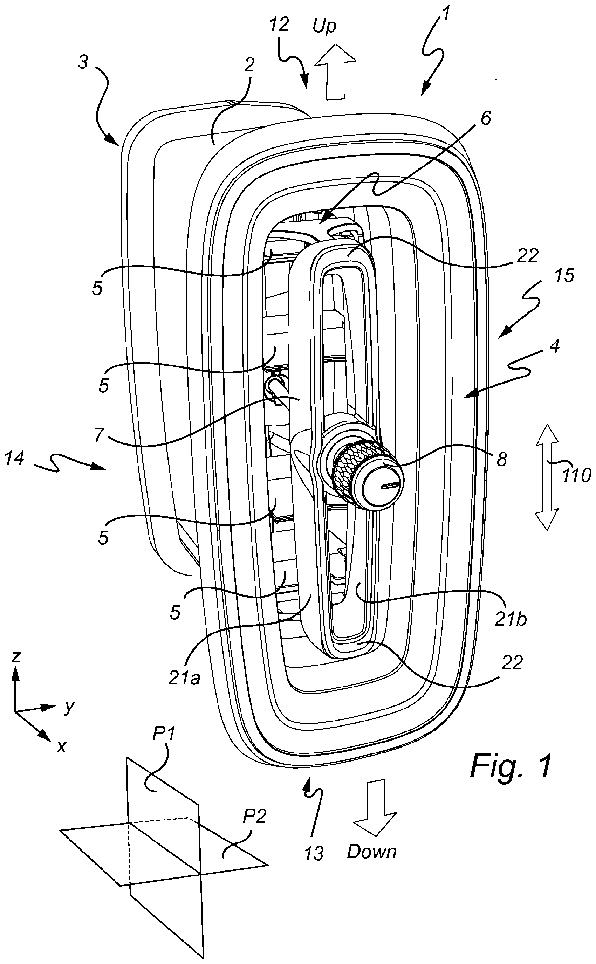

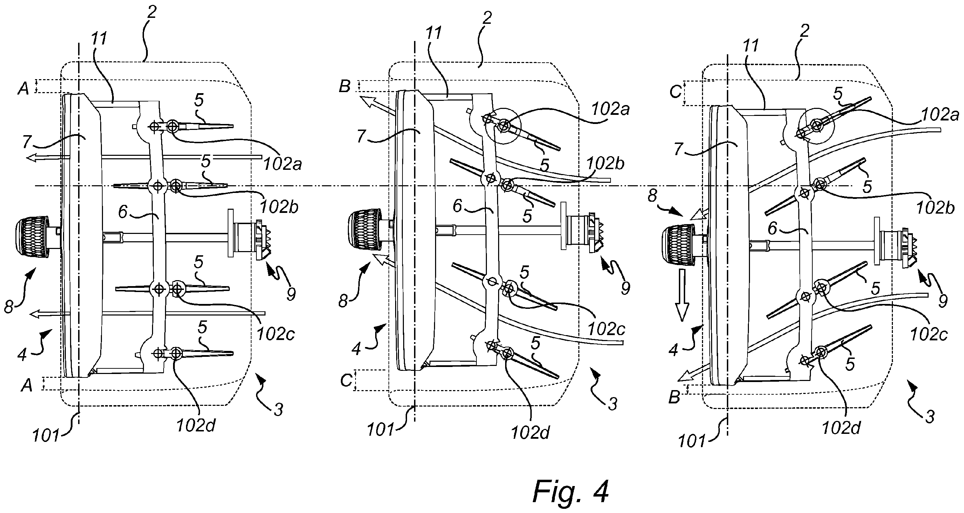

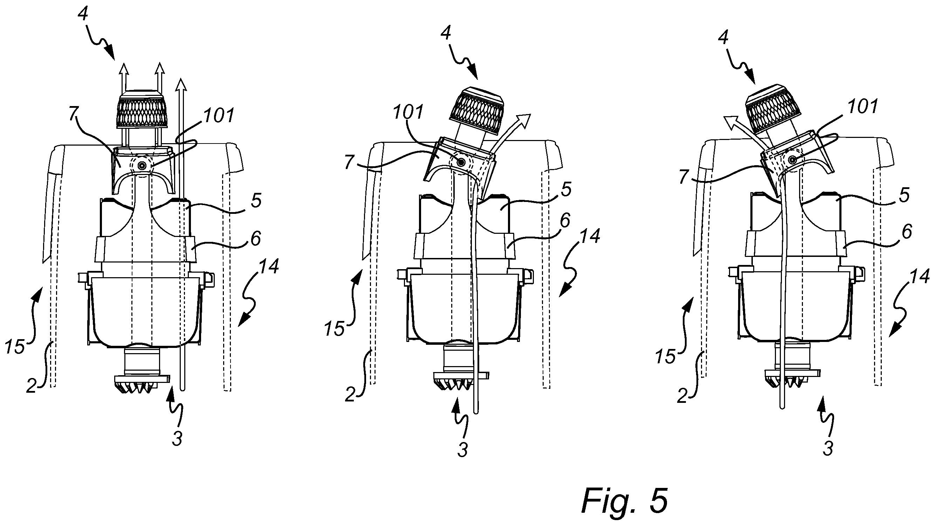

Fig. 1 is a perspective view illustration of an internal air vent 1 for a vehicle in accordance with an embodiment of the present invention. The internal air vent 1 has a frame 2 which defines an air outlet. The frame 2 may also be construed a vent housing. Further, the frame 2 has a back end 3 and a front end 4. The back end 3 is preferably arranged to be connected to a ventilation system of the vehicle for receiving an air stream, while the front end is employed to release the air stream into the vehicle. Stated differently, an air inlet can be defined by the back end 3 and an air outlet can be defined by the front end 4 of the frame 2. The direction of the ejected air stream is, as mentioned, controlled by suitable movement of the vanes of the internal air vent 1, as will be further discussed in reference to Figs. 4 and 5.

The frame 2 (or vent housing) has a generally rectangular shape, seen from the front end 4, i.e. from a straight front view perspective. In other words, the frame 2 has an elongated shape, and is typically longer than its wide. The frame 2 may have an aspect ratio (width:length) of 1:1-10 or any number in between, such as 2:9 or 2:15. In other embodiments of the present invention (not shown) the frame 2 may be oval, circular, square, polygonal, or in principle any suitable shape for an intended application. The frame 2 may be made of a plastic material. In fact, all or at least some parts/components of the internal air vent 1 may be made of a plastic material, however, the skilled person readily realizes that other suitable materials may be used such as e.g. carbon fiber, wood, metal, etc. The length of the frame, i.e. the distance between the top 12 and the bottom 13 may be in the range of 6 cm to 20 cm, or in the range of 6 cm to 40 cm. The width of the frame 2, i.e. the distance between the lateral sides 14, 15 may be in the range of 2 cm to 10 cm, or in the range of 2 cm to 14 cm.

The internal air vent 1 further has a set of back vanes 5, four back vanes in the illustrated embodiment of Fig. 1, arranged within the frame 2. Each of the back vanes 5 is pivotally/pivotably connected to the frame 2 of the internal air vent 1 in order to redirect the air stream flowing through the air vent 1 in a first plane P1. In this particular embodiment the first plane P1 is arranged as a vertical plane (i.e. the x-z plane, in the Cartesian coordinate system illustrated in the figure). Thus it can be said that, in use, the back vanes are utilized to direct/redirect the air stream upwards or downwards, if the internal air vent is mounted as illustrated in Fig. 1, i.e. in an upright manner.

Further, the internal air vent 1 has a linkage structure 6 connected to each of the back vanes 5. In this embodiment the linkage structure 6 is also arranged within the frame 2. However, since many of the internal components of the internal air vent 1, such as the linkage structure 6, are barely visible in the perspective view shown in Fig. 1, details regarding the linkage structure 6 will be further discussed in reference to the coming figures.

Even further, the internal air vent has a front vane unit 7 arranged in front of the back vanes 5. "In front of" is in the present context to be understood as closer to the front end 4 of the frame 2. The front vane unit 7 is pivotally connected to, and supported by, the linkage structure 6 in order to redirect the air stream in a second plane P2. The second plane P2 is perpendicular to the first plane P1. In this embodiment, the second plane is arranged as a horizontal plane (i.e. the x-y plane in a conventional Cartesian coordinate system). Accordingly, it can be said that, in use, the front vane unit 7 is utilized to direct/redirect the air stream leftwards or rightwards, if the internal air vent is mounted as illustrated in Fig. 1, i.e. in an upright manner.

Moreover, the front vane unit 7 is slidable along a sliding direction, which is perpendicular to the second plane P2, as indicated by the double headed arrow 110. The linkage structure 6 is configured to transfer this sliding motion of the front vane unit 7 to a pivoting motion of the back vanes 5, which as mentioned redirects the air stream in the first plane P1. The sliding motion of the front vane unit 7 in either direction 110 from a neutral position, e.g. up or down in Fig. 1, are preferably in the range of 5 mm to 20 mm. Making the total length of a sliding motion for the front vane unit from the up-most position to the down-most position in the range of 10 mm to 40 mm.

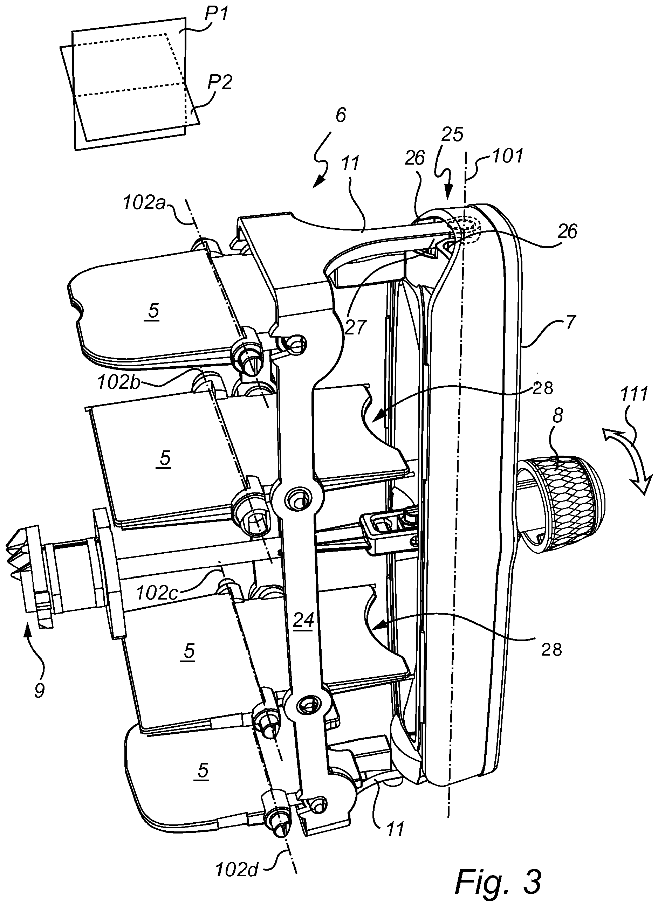

The front vane unit 7 comprises two vane blades or fins 21a, 21b. The two vane blades 21a, 21b are connected to each other via a pair of connecting portions 22, together forming the front vane unit 7. Stated differently, the two vane blades 21a, 21b are connected to each other and form a front vane frame, which also may be interpreted as an annular fin. Accordingly, the whole front vane unit 7 may be made of plastic and can be molded or extruded. Alternatively, various parts of the front vane unit, such as the vane blades 21a, 21b and connecting portions 22 may be formed/manufactured separately and subsequently attached together to make the front vane unit 7. The vane blades 21a, 21b are here in the form of elongated fins having a main extension axis or elongated axis parallel to the rotational axis (see e.g. ref. 101 in Figs. 3 and 4) of the front vane unit 7.

Further, the internal air vent 1 has an air flow rate control member 8, with a protruding portion, here in the form of a knob. Thus, the flow rate control member 8 is arranged to protrude from the front vane unit 7 away from the back vanes 5. The air flow rate control member 8 is movable relative to the housing 2 (e.g. rotatable, see ref. 111 in Fig. 3) to control a flow rate of the air stream being ejected from the internal air vent 1. The air flow rate control member 8 is arranged centrally through e.g. an opening formed in the front vane unit 7, between the two front vane blades 21a, 21b in the illustrated embodiment. The air flow rate control member 8 may also be arranged to extend through a front vane blade, if for example the front vane unit 7 would comprise an odd number of vane blades (e.g. 1, 3, or 5 vane blades). However, the air flow rate control member 8 need not be centrally arranged through the front vane unit, but may in principle be placed at any part of the front vane unit 7. Preferably, the air flow rate control member 8 comprises a hinged or jointed portion such that the protruding portion of the air flow rate control member 8 may be pivoted about the same rotational axis as the front vane unit 7 in order to not hinder the pivoting motion of the latter.

Moreover, because the flow rate control member 8 protrudes from the front vane unit 7 the accessibility for manipulation by an operator or user is facilitated. For example, the flow rate can be controlled by a user by e.g. twisting or turning the flow rate control member 8 in a predefined direction whereby the twisting motion is transferred to control an air valve or the like arranged further upstream relative to the flow rate control member 8. Thus, by turning or twisting the flow rate control member 8, the amount and/or the velocity of the air which is released from the internal air vent 1 into the vehicle cabin can be increased or decreased.

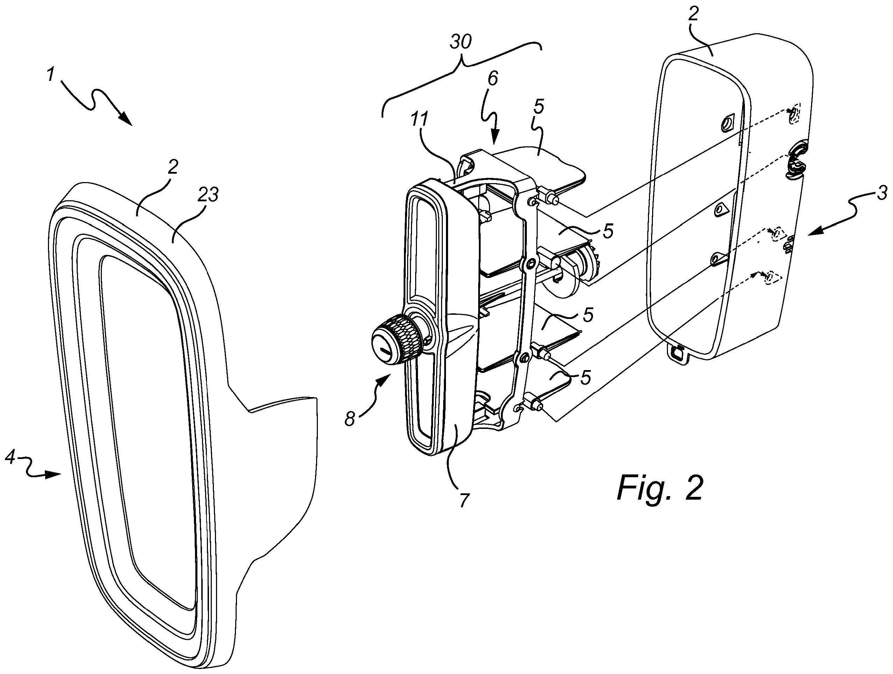

The following description will be in reference to Figures 2 and 3 in order to further elucidate the internal structural components and their functionality, where Fig. 2 is an exploded perspective view illustration of an internal air vent 1 and Fig. 3 is a different perspective view of section 30 in Fig. 2. The back vanes 5 include pivot pins protruding from the lateral sides of each back vane 5. The pivot pins can be said to define the rotational axis (ref. 102a - 102d in Fig. 3) about which each back vane 5 pivots. Furthermore, the pivot pins engage a corresponding opening in the lateral sides of the frame 2 as indicated by the arrows in Fig. 2, whereby the back vanes 5 can be understood as pivotally connected to the frame 2 when the internal air vent 1 is assembled. However, it goes without saying that the pins and openings are exchangeable between the components, i.e. the frame 2 may be provided with pivot pins which are to be received in a matching opening arranged on the lateral sides of each back vane 5.

Moreover, the frame 2 of the internal air vent 1 further comprises a front connection portion 23 which is adapted to partly secure the frame 2 e.g. within an opening or cavity provided on a dashboard of a vehicle, and partly to cover the opening or cavity. Here they are illustrated as separate parts, however, the two 2, 23 may be arranged as a singular integrated unit (not shown).

Further, Fig. 3 shows a more detailed illustration of how the internal components (e.g. back vanes 5, the linkage structure 6 and the front vane unit 7) of the internal air vent 1 may be arranged. As previously discussed, the front vane unit 7 is arranged to pivot around or about a rotational axis 101 in order to redirect the air stream in the second plane P2. The rotational axis 101 is preferably more or less perpendicular to the second plane P2. The linkage structure 7 is of a square C-shape when viewed from a straight side perspective (i.e. when the observer is facing one of the lateral sides), where the top and bottom portions form two connection flanges 11 which are configured to engage two opposite ends of the front vane unit 7. Accordingly, the front vane unit 7 is connected to the linkage structure 6 via the two connection flanges 11 of the linkage structure 6.

Even further, the front vane unit 7 has two receiving portions 25 (only the top one is indicated in the figure). The receiving portions are arranged to receive and connect to the connection flanges 11 of the linkage structure 6. Moreover, the receiving portion 25 comprises a blocking structure 26, which is arranged to limit the pivoting motion of the front vane unit 7 about the rotational axis 101. In more detail, the blocking structure 26 arranged to abut against the lateral sides 27 of the connection flanges 11, when the front vane unit 7 reaches either one of its pivoting end positions (i.e. maximum rotation). The blocking structure 26 may be provided on one or both sides of the front vane unit 7. Further, as indicated by the broken line portion of the connection flange 11, which extends into the front vane unit 7, the connection flange has a distal end in the form of a circular opening adapted to be arranged about a pivot pin of the front vane unit 101.

The linkage structure 6 comprises a frame portion, which in the present embodiment is of a rectangular shape, where the back vanes 5 at least partly extend through the frame portion. The frame portion has a pair of elongated jambs or side posts 24 to which the back vanes are connected, the back vanes 5 are serially arranged between and along a length of the jambs 24. The jambs 24 of the linkage structure 6 have a longitudinal/elongated axis substantially parallel to the rotational axis 101 of the front vane unit 7.

Further, the linkage structure 6 is connected to the lateral sides of each back vane 5 so that a translational movement of the linkage structure along the rotational axis 101 of the front vane unit (i.e. up or down) results in a pivoting motion of the back vanes 5 about their rotational axes 102a - 102d. The coupling portions of the back vanes 5 to which the linkage structure 6 is connected are preferably arranged in front of the rotational axes 102a - 102d of the back vanes when the back vanes are in a neutral position (see e.g. the leftmost illustration in Fig. 4). This is advantageous in order to reduce the size of the linkage structure 6 and make the whole air vent more space efficient and compact. However, it goes without saying the coupling portions of the back vanes may also be positioned behind the rotational axes 102a - 102d when the back vanes are in a neutral position. As mentioned, the terms "behind" and "in front of" are here in reference to the illustrated embodiment and are not to be construed as limiting but merely to facilitate the understanding of the inventive concept. Thus, as previously discussed in reference to other components, "behind" may be understood as closer to the back end 3 of the frame 2, while "in front of" may be understood as closer to the front end 4 of the frame 2.

Even though the linkage structure 6 is in this particular embodiment connected to both sides of each of the back vanes 5, other alternative arrangements are feasible, such as for example only connecting the linkage structure 6 to one of the sides or to any other suitable portion of the back vanes 5 in order to transfer a sliding motion of the front vane unit 7 to a pivoting motion of the back vanes 5.

Moreover, two of the back vanes 5, more particularly the two "central" back vanes 5 are arranged with a concave edge portion 28 facing towards the front of the air vent. In other words, the edge of the back vanes 5 that is facing towards the front vane unit 7 has a concave portion. This maximizes the applicable length of the back vanes (from back to front) without obstructing the rotational or pivoting movement of the front vane unit 7. It is desirable to have relatively long back vanes in order to increase the effect in terms of directing air flow by means of the back vanes 5. One or more of the back vanes 5 may be arranged with a concave edge portion 28.

Further, an air flow rate control member 8 is arranged through the front vane unit 7. The air flow rate control member 8 has a knob portion which protrudes in front of the front vane unit 7. In use, the knob portion may be manipulated (e.g. rotated 111) by an occupant of a vehicle in order to control a flow rate of an air stream being ejected from the internal air vent. The air flow rate control member 8 has a shaft portion which extends from the front end to the back end of the internal air vent 1 (or vice versa) through the frame. Preferably the air flow rate control member 8 comprises a hinged portion or a jointed portion such that the protruding portion of the air flow rate control member 8 can be pivoted together with the front vane unit 7. In more detail, the jointed portion of the air flow rate control member can be arranged so that the protruding portion pivots about the same rotational axis 101 as the front vane unit 7.

The air flow rate control member 8 comprises a coupling portion 9 attached to a back end of the shaft, i.e. to an opposite end of the shaft relative to the protruding portion. The coupling portion 9 is preferably configured to be connected to an air valve or the like in a vehicle ventilation system.

Fig. 4 shows three cross-sectional side view illustrations of an internal air vent 1 in accordance with an embodiment of the invention. The leftmost illustration shows the internal air vent 1 where the back vanes are arranged in a "neutral" position, i.e. the front vane unit is in a "neutral" position. In the neutral position the distances A between the inner top and bottom surfaces of the frame 2 and the top and bottom ends of the front vane unit 7 are substantially equal. As indicated by the bolded arrows, the air stream received at the back end of the frame 2 is directed substantially straight out of the front end 4 of the frame, disregarding effect of the front vane unit 7 on the direction of the air flow.

The middle illustration in Fig. 4 shows the back vanes arranged in a pivoted or tilted position. This is also indicated by the distance B which is smaller than A and distance C which is larger than A (i.e. B<A<C). In more detail, the back vanes 5 are, in the middle illustration, pivoted upwards so to direct an air stream received at the back end 3 of the frame 2 upwards when the airstream is released from the front end 4 of the frame, as indicated by the bolded arrows. In use, the pivoting of the back vanes 5 is achieved by sliding the front vane unit 7 upwards, whereby the linkage structure 6 transfers the sliding motion to a pivoting motion. In the rightmost illustration the front vane unit is slid downwards whereby the back vanes 5 are pivoted and the air stream is redirected downwards.

Fig. 5 shows three cross-sectional top view illustrations of an internal air vent 1, in order to elucidate the pivoting motion of the front vane unit 7. In the leftmost illustration the front vane unit 7 is arranged in a neutral position, i.e. it is not particularly rotated towards any side. The air stream received at the back end 3 is therefore released straight out of the internal air vent 1, disregarding effect of the back vanes 5 on the direction of the air flow.

In the middle illustration of Fig. 5, the front vane unit 7 is pivoted towards one of the lateral sides of the internal air vent, left in the perspective shown in Fig. 5, whereby the airstream is directed towards the left (as indicated by the bolded arrow). In more detail, the portion of the air stream between the front vane unit 7 and the right inner wall is subdued to the Coanda effect, while the portion of the air stream between the front vane unit 7 and the left inner wall is subdued to the Pulling effect, whereby the whole air stream is substantially directed rightwards. Analogously, the rightmost illustration shows a situation when the front vane unit is pivoted towards the other lateral side of the internal air vent 1, right in the perspective shown in Fig. 5, whereby the airstream is directed towards the right (as indicated by the bolded arrow).

Moreover, the front vane unit 7 has a clearance (i.e. an arbitrary amount of free space) to the internal walls of the frame 2 in all positions. By not allowing the front vane unit to have a "back end" abut against the internal walls of the frame 2 when the front vane unit 7 is arranged in a pivot end position, the air directivity is improved, particularly towards the corners of the internal air vent (e.g. when the internal air vent is arranged to redirect air upwards and to the left simultaneously).

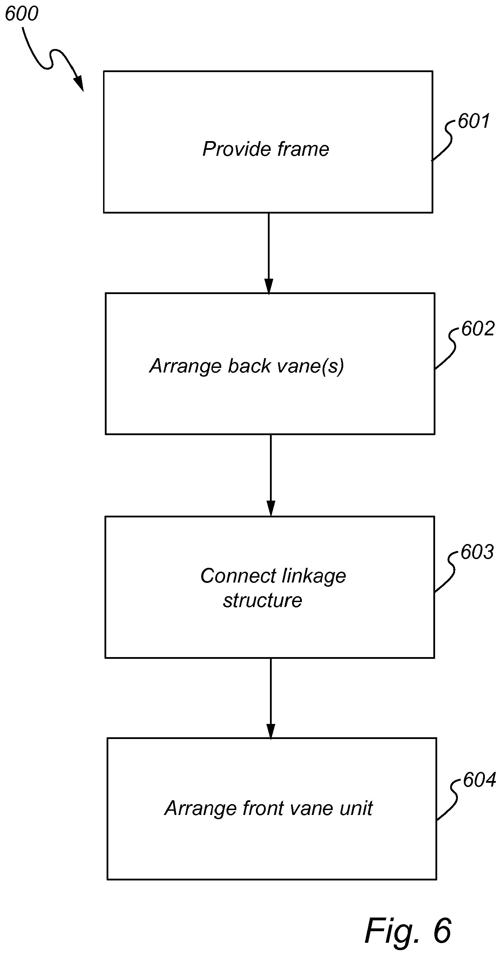

Fig. 6 is a flow chart representation of a method 600 for assembling an internal air vent 1 for a vehicle in accordance with an embodiment of the present invention. The method 600 includes a step of providing 601 a frame defining an air outlet. The frame 2 has a back end connectable to a ventilation system for receiving an air stream and a front end for releasing the air stream into the vehicle. Next, one or more back vanes 5 is/are arranged 602 within the frame. The back vane(s) is/are pivotally connected to the frame.

Further, a linkage structure 6 is connected 603 to the one or more back vanes 5. Then, a front vane unit 7 is arranged 604 within the frame in front of the back vane(s). The front vane unit 7 is pivotally connected to the linkage structure 6 so that the front vane unit is supported within the frame by the linkage structure. Moreover, the linkage structure 6 is accordingly arranged to transfer a sliding motion of the front vane unit 7 to a pivoting motion of the one or more back vanes 5, as discussed in reference to the other previous drawings.

The invention has now been described with reference to specific embodiments. However, several variations of the internal air vent are feasible. For example, the general shape of the housing and accordingly of the front vane unit may be different from the one depicted in the drawings, also the front vane unit may only comprise one vane blade which is supported by and pivotally connected to the linkage structure. Moreover, the front vane unit may include some type of skeleton structure which is covered by a more aerodynamically shaped cover to form the vane blade(s) of the front vane unit. should be noted that the above-mentioned embodiments illustrate rather than limit the invention, and that those skilled in the art will be able to design many alternative embodiments without departing from the scope of the appended claims. In the claims, any reference signs placed between parentheses shall not be construed as limiting to the claim.

## Claims

1. An internal air vent (1) for a vehicle, comprising:
a frame (2) defining an air outlet, said frame having a back end (3) connectable to a ventilation system for receiving an air stream and a front end (4) for releasing the air stream into the vehicle;
at least one back vane (5) arranged in the frame, each back vane (5) being pivotally connected to the frame in order to redirect the air stream in a first plane (P1);
a linkage structure (6) connected to the at least one back vane (5);
a front vane unit (7) arranged in front of said at least one back vane (5),
wherein the front vane unit (7) is pivotally connected to and supported by the linkage structure (6) in order to redirect the air stream in a second plane (P2) which is perpendicular to the first plane (P1); and
wherein the front vane unit (7) is slidable along a sliding direction (110) which is perpendicular to said second plane (P2), and wherein the linkage structure (6) is configured to transfer a sliding motion of the front vane unit (7) along the sliding direction (110) to a pivoting motion of the at least one back vane (5) thereby controlling the redirection of air in the first plane (P1),
the internal air vent 2. (1) further comprising an airflow rate control member (8) arranged to protrude from the front vane unit (7) away from the at least one back vane (5),
wherein said airflow rate control member 2. (8) is movable to control a flow rate of the air stream being ejected from the internal air vent (1).

2. The internal air vent (1) according to claim 1, wherein said front vane unit 2. (7) is arranged to pivot around a rotational axis (101), said rotational axis having an extension perpendicular to said second plane (P2).

3. The internal air vent (1) according to claim 2, wherein said front vane unit (7) is connected to said linkage structure (6) via two connection flanges (11) of the linkage structure (6) which are connected to opposite ends of said front vane unit (7) along said rotational axis (101),
wherein each of the two connection flanges (11) couple to the front vane unit (7) at a connection point, the two connection points defining said rotational axis (101).

4. The internal air vent (1) according to claim 3, wherein said front vane unit (7) has two receiving portions (25) for receiving said two connection flanges (11) of said linkage structure (6),
wherein at least one of said receiving portions (25) comprises a blocking
structure (26) in order to limit a pivoting motion around said rotational axis (101).

5. The internal air vent (1) according to claim 4, wherein at least one of said receiving portions (25) comprises a pivot pin arranged to be received in a corresponding opening in the connection flanges (11).

6. The internal air vent (1) according to claim 4, wherein at least one of said receiving portions (25) comprises an opening adapted to receive a corresponding pivot pin of the connection flanges (11).

7. The internal air vent (1) according to claim any one of the preceding claims, wherein said front vane unit (7) comprises two vane blades (21a, 21b), and wherein the two vane blades (21a, 21b) are connected to each other and together form a front vane frame.

8. The internal air vent (1) according to any one of the preceding claims, comprising a plurality of back vanes (5), the back vanes (5) being connected by the linkage structure (6).

9. The internal air vent (1) according to claim 8, wherein at least one of said plurality of back vanes (5) has a first edge which is facing towards the front vane unit (7), and wherein said first edge has a concave portion (28).

10. An internal air vent (1) for a vehicle, comprising:
a frame (2) defining an air outlet, said frame having a back end (3) connectable to a ventilation system for receiving an air stream and a front end (4) for releasing the air stream into the vehicle;
at least one back vane (5) arranged in the frame, each back vane (5) being pivotally connected to the frame (2) in order to redirect the air stream in a first plane (P1);
a linkage structure (6) connected to the at least one back vane (5);
a front vane unit (7) arranged in front of said at least one back vane (5),
wherein the front vane unit (7) is pivotally connected to and supported by the linkage structure (6) in order to redirect the air stream in a second plane (P2) which is perpendicular to the first plane (P1); and
wherein the front vane unit (7) is slidable along a sliding direction (110) which is perpendicular to said second plane (P2), and wherein the linkage structure (6) is configured to transfer a sliding motion of the front vane unit (7) along the sliding direction (110) to a pivoting motion of the at least one back vane (5) thereby controlling the redirection of air in the first plane (P1),
wherein said front vane unit (7) is arranged to pivot around a rotational axis (101), said rotational axis (101) having an extension perpendicular to said second plane (P2), wherein said front vane unit (7) is connected to said linkage structure (6) via two connection flanges (11) of the linkage structure (6) which are connected to opposite ends of said front vane unit (7) along said rotational axis (101),
wherein each of the two connection flanges (11) couple to the front vane unit (7) at a connection point, the two connection points defining said rotational axis (101),
wherein said front vane unit (7) has two receiving portions (25) for receiving said two connection flanges (11) 2. of said linkage 2. structure (6), and
wherein at least one of said receiving portions (25) comprises a blocking structure (26) in order to limit a pivoting motion around said rotational axis (101).

11. A method for assembling an internal air vent (1) for a vehicle according to claim 1,
said method comprising:
providing a frame (2) which defines an air outlet, said frame having a back end (3) connectable to a ventilation system for receiving an air stream and a front end (4) for releasing the air stream into the vehicle;
arranging at least one back vane (5) in the frame (2), and pivotally connecting said at least one back vane (5) 2. to the frame (2);
connecting a linkage structure (6) to the at least one back vane (5);
arranging a front vane unit (7) within the frame (2) in front of the at least one back vane (5), and connecting the front vane unit (7) pivotally to the linkage structure (6), such that the front vane unit (7) is supported within the frame (2) by the linkage structure (6) and such that the linkage structure (6) transfers a sliding motion of the front vane unit (7) to a pivoting motion of said at least one back vane (5),
wherein the internal air vent (1) further comprises an air flow rate control member (8) arranged to protrude from the front vane unit (7) away from the at least one back vane (5), wherein said airflow rate control member (8) is movable to control a flow rate of the air stream being ejected from the internal air 2. vent (1).

12. A method for assembling an internal air vent (1) for a vehicle according to claim 10,
said method comprising:
providing a frame (2) which defines an air outlet, said frame (2) having a back end (3) connectable to a ventilation system for receiving an air stream and a front end (4) for releasing the air stream into the vehicle;
arranging at least one back vane (5) in the frame (2), and pivotally connecting said at least one back vane (5) 2. to the frame (2);
connecting a linkage structure (6) to the at least one back vane (5); arranging a front vane unit (7) within the frame (2) in front of the at least one back vane (5), and connecting the front vane unit (7) pivotally to the linkage structure (6), such that the front vane unit (7) is supported within the frame (2) by the linkage structure (6) 2. and such that the linkage structure (6) 2. transfers a sliding motion of the front vane unit (7) to a pivoting motion of said at least one back vane (5),
wherein said front vane unit (7)
is arranged to pivot around a rotational axis (101), said rotational axis having an extension perpendicular to a plane (P2),
wherein said front vane unit (7) is connected to said linkage structure (6) via two connection flanges (11) of the linkage structure (6) which are connected to opposite ends of said front vane unit (7) along said rotational axis (101),
wherein each of the two connection flanges (11) couple to the front vane unit (7) at a connection point, the two connection points defining said rotational axis (101),
wherein said front vane unit (7) has two receiving portions (25) for receiving said two connection flanges (11) of said linkage structure (6), and
wherein at least one of said receiving portions (25) comprises a blocking structure (26) in order to limit a pivoting motion around said rotational axis (101).

## Patentansprüche

1. Luftaustritt (1) für ein Fahrzeug, umfassend:
einen Rahmen (2), der einen Luftauslass definiert, wobei der Rahmen ein hinteres Ende (3) aufweist, das mit einem Belüftungssystem zum Aufnehmen eines Luftstroms verbindbar ist, und ein vorderes Ende (4) zum Ablassen des Luftstroms in das Fahrzeug;
mindestens ein in dem Rahmen angeordneter hinterer Flügel (5), wobei jeder hintere Flügel (5) schwenkbar mit dem Rahmen verbunden ist, um den Luftstrom in einer ersten Ebene (P1) umzuleiten;
eine Verbindungsstruktur (6), die mit der mindestens einen hinteren Flügel (5) verbunden ist;
eine vordere Flügeleinheit (7), die vor der mindestens einen hinteren Flügel (5) angeordnet ist,
wobei die vordere Flügeleinheit (7) schwenkbar mit der Verbindungsstruktur (6) verbunden ist und von dieser getragen wird, um den Luftstrom in einer zweiten Ebene (P2) umzuleiten. welche senkrecht zur ersten Ebene (P1) ist; und
wobei die vordere Flügeleinheit (7) entlang einer Gleitrichtung (110) verschiebbar ist, die senkrecht zu der zweiten Ebene (P2) ist, und wobei die Verbindungsstruktur (6) konfiguriert ist, um eine Gleitbewegung der vorderen Flügeleinheit (7) entlang der Gleitrichtung (110) zu einer Schwenkbewegung des mindestens einen hinteren Flügels (5) zu übertragen, wodurch die Umlenkung der Luft in der ersten Ebene (P1) gesteuert wird,
der Luftaustritt (1) umfasst ferner ein Luftströmungssteuerelement (8), das so angeordnet ist, dass es von der vorderen Flügeleinheit (7) weg von den mindestens einen hinteren Flügeln (5) ragt, wobei das Luftströmungssteuerelement (8) beweglich ist, um eine Strömungsrate des Luftstroms, der aus dem Luftaustritt (1) ausgestoßen wird, zu steuern.

2. Luftaustritt (1) nach Anspruch 1, wobei die vordere Flügeleinheit (7) so angeordnet ist, dass sie sich um eine Rotationsachse (101) dreht, wobei die Rotationsachse eine Ausdehnung senkrecht zu der zweiten Ebene (P2) aufweist.

3. Luftaustritt (1) nach Anspruch 2, wobei die vordere Flügeleinheit (7) mit der Verbindungsstruktur (6), über zwei Verbindungsflansche (11) der Verbindungsstruktur (6), verbunden ist, die mit gegenüberliegenden Enden der vorderen Flügeleinheit (7) entlang der Rotationsachse (101) verbunden sind, wobei jeder der beiden Verbindungsflansche (11) mit der vorderen Flügeleinheit (7) an einem Verbindungspunkt gekoppelt ist, wobei die zwei Verbindungspunkte die Rotationsachse (101) definieren.

4. Luftaustritt (1) nach Anspruch 3, wobei die vordere Flügeleinheit (7) zwei Aufnahmeteile (25) zum Aufnehmen der beiden Verbindungsflansche (11) der Verbindungsstruktur (6) aufweist, wobei mindestens einer der Aufnahmeabschnitte (25) eine Blockierungsstruktur (26) aufweist, um eine Schwenkbewegung um die Rotationsachse (101) herum zu begrenzen.

5. Luftaustritt (1) nach Anspruch 4, wobei mindestens einer der Aufnahmeteile (25) einen Drehzapfen aufweist, der so angeordnet ist, dass er in einer entsprechenden Öffnung in den Verbindungsflanschen (11) aufgenommen werden kann.

6. Luftaustritt (1) nach Anspruch 4, wobei mindestens einer der Aufnahmeabschnitte (25) eine Öffnung aufweist, die dazu ausgelegt ist, einen entsprechenden Drehzapfen der Verbindungsflansche (11) aufzunehmen.

7. Luftaustritt (1) nach einem der vorhergehenden Ansprüche, wobei die vordere Flügeleinheit (7) zwei Flügel (21a, 21b) umfasst und wobei die beiden Flügel (21a, 21b) miteinander verbunden sind und zusammen einen vorderen Flügelrahmen bilden.

8. Luftaustritt (1) nach einem der vorhergehenden Ansprüche umfassend mehrere hintere Flügel (5), wobei die hinteren Flügel (5) durch den Verbindungsstruktur (6) verbunden sind.

9. Luftaustritt (1) nach Anspruch 8, wobei mindestens einer der mehreren hinteren Flügel (5) eine erste Kante aufweist, die der vorderen Flügeleinheit (7) zugewandt ist, und wobei die erste Kante einen konkaven Abschnitt (28) aufweist.

10. Luftaustritt (1) für ein Fahrzeug, umfassend:
einen Rahmen (2), der einen Luftauslass definiert, wobei der Rahmen ein hinteres Ende (3) aufweist, das mit einem Belüftungssystem zum Aufnehmen eines Luftstroms verbindbar ist, und ein vorderes Ende (4) zum Ablassen des Luftstroms in das Fahrzeug;
mindestens ein in dem Rahmen angeordneter hinterer Flügel (5), wobei jeder hintere Flügel (5) schwenkbar mit dem Rahmen (2) verbunden ist, um den Luftstrom in einer ersten Ebene (P1) umzuleiten;
eine Verbindungsstruktur (6), die mit der mindestens einen hinteren Flügel (5) verbunden ist;
eine vordere Flügeleinheit (7), die vor der mindestens einen hinteren Flügel (5) angeordnet ist,
wobei die vordere Flügeleinheit (7) schwenkbar mit der Verbindungsstruktur (6) verbunden ist und von dieser getragen wird, um den Luftstrom in einer zweiten Ebene (P2) umzuleiten, welche senkrecht zur ersten Ebene (P1) ist; und
wobei die vordere Flügeleinheit (7) entlang einer Gleitrichtung (110) verschiebbar ist, die senkrecht zu der zweiten Ebene (P2) ist, und wobei die Verbindungsstruktur (6) konfiguriert ist, um eine Gleitbewegung der vorderen Flügeleinheit (7) entlang der Gleitrichtung (110) zu einer Schwenkbewegung des mindestens einen hinteren Flügels (5) zu übertragen, wodurch die Umlenkung der Luft in der ersten Ebene (P1) gesteuert wird,
wobei die vordere Flügeleinheit (7) so angeordnet ist, dass sie sich um eine Rotationsachse (101) dreht, wobei die Rotationsachse (101) eine Ausdehnung senkrecht zu der zweiten Ebene (P2) aufweist,
wobei die vordere Flügeleinheit (7) mit der Verbindungsstruktur (6) über zwei Verbindungsflansche (11) der Verbindungsstruktur (6), verbunden ist, die mit gegenüberliegenden Enden der vorderen Flügeleinheit (7) entlang der Rotationsachse (101) verbunden sind, wobei jeder der beiden Verbindungsflansche (11) mit der vorderen Flügeleinheit (7) an einem Verbindungspunkt gekoppelt ist, wobei die zwei Verbindungspunkte die Rotationsachse (101) definieren,
wobei die vordere Flügeleinheit (7) zwei Aufnahmeteile (25) zum Aufnehmen der beiden Verbindungsflansche (11) der Verbindungsstruktur (6) aufweist, wobei mindestens einer der Aufnahmeabschnitte (25) eine Blockierungsstruktur (26) aufweist, um eine Schwenkbewegung um die Rotationsachse (101) herum zu begrenzen.

11. Verfahren zum Zusammenbau eines Luftaustritts (1) in einem Fahrzeug nach Anspruch 1, wobei das Verfahren umfasst:
Bereitstellen eines Rahmens (2), der einen Luftauslass definiert, wobei der Rahmen ein hinteres Ende (3) aufweist, das mit einem Belüftungssystem zum Aufnehmen eines Luftstroms verbindbar ist, und ein vorderes Ende zum Ablassen des Luftstroms in das Fahrzeug;
Anordnen mindestens eines hinteren Flügels (5) in dem Rahmen (2) und schwenkbares Verbinden mindestens eines hinteren Flügels (5) mit dem Rahmen (2);
Verbinden einer Verbindungsstruktur (6) mit mindestens einem hinteren Flügel (5);
Anordnen einer vorderen Flügeleinheit (7) innerhalb des Rahmens (2) vor dem mindestens einen hinteren Flügel (5) und schwenkbares Verbinden der vorderen Flügeleinheit (7) mit der Verbindungsstruktur (6), so dass die vordere Flügeleinheit (7) innerhalb des Rahmens (2) durch die Verbindungsstruktur (6) unterstützt wird und so, dass die Verbindungstruktur (6) eine Gleitbewegung der vorderen Flügeleinheit (7) in eine Schwenkbewegung des mindestens einen hinteren Flügels (5) überträgt, wobei der Luftaustritt (1) ferner ein Luftströmungssteuerelement (8) umfasst, das so angeordnet ist, dass es von der vorderen Flügeleinheit (7) weg von den mindestens einen hinteren Flügeln (5) ragt, wobei das Luftströmungssteuerelement (8) beweglich ist, um eine Strömungsrate des Luftstroms, der aus dem Luftaustritt (1) ausgestoßen wird, zu steuern.

12. Verfahren zum Zusammenbau eines Luftaustritts (1) in einem Fahrzeug nach Anspruch 10, wobei das Verfahren umfasst:
Bereitstellen eines Rahmens (2), der einen Luftauslass definiert, wobei der Rahmen ein hinteres Ende (3) aufweist, das mit einem Belüftungssystem zum Aufnehmen eines Luftstroms verbindbar ist, und ein vorderes Ende zum Ablassen des Luftstroms in das Fahrzeug;
Anordnen mindestens eines hinteren Flügels (5) in dem Rahmen (2) und schwenkbares Verbinden mindestens eines hinteren Flügels (5) mit dem Rahmen (2);
Verbinden einer Verbindungsstruktur (6) mit mindestens einem hinteren Flügel (5);
Anordnen einer vorderen Flügeleinheit (7) innerhalb des Rahmens (2) vor dem mindestens einen hinteren Flügel (5) und schwenkbares Verbinden der vorderen Flügeleinheit (7) mit der Verbindungsstruktur (6), so dass die vordere Flügeleinheit (7) innerhalb des Rahmens (2) durch die Verbindungsstruktur (6) unterstützt wird und so, dass die Verbindungstruktur (6) eine Gleitbewegung der vorderen Flügeleinheit (7) in eine Schwenkbewegung des mindestens einen hinteren Flügels (5) überträgt,
wobei die vordere Flügeleinheit (7) so angeordnet ist, dass sie sich um eine Rotationsachse (101) dreht, wobei die Rotationsachse eine Ausdehnung senkrecht zu der zweiten Ebene (P2) aufweist,
wobei die vordere Flügeleinheit (7) mit der Verbindungsstruktur (6), über zwei Verbindungsflansche (11) der Verbindungsstruktur (6), verbunden ist, die mit gegenüberliegenden Enden der vorderen Flügeleinheit (7) entlang der Rotationsachse (101) verbunden sind, wobei jeder der beiden Verbindungsflansche (11) mit der vorderen Flügeleinheit (7) an einem Verbindungspunkt gekoppelt ist, wobei die zwei Verbindungspunkte die Rotationsachse (101) definieren,
wobei die vordere Flügeleinheit (7) zwei Aufnahmeteile (25) zum Aufnehmen der beiden Verbindungsflansche (11) der Verbindungsstruktur (6) aufweist, und
wobei mindestens einer der Aufnahmeabschnitte (25) eine Blockierungsstruktur (26) aufweist, um eine Schwenkbewegung um die Rotationsachse (101) herum zu begrenzen.

## Revendications

1. Diffuseur d'air interne (1) pour un véhicule, comprenant :
un cadre (2) définissant une sortie d'air, ledit cadre ayant une extrémité arrière (3) pouvant être reliée à un système de ventilation pour recevoir un flux d'air et une extrémité avant (4) pour libérer le flux d'air dans le véhicule ;
au moins une ailette arrière (5) agencée dans le cadre, chaque ailette arrière (5) étant reliée de manière pivotante au cadre afin de rediriger le flux d'air dans un premier plan (P1);
une structure de liaison (6) reliée à l'au moins une ailette arrière (5) ;
une unité d'ailette avant (7) agencée devant ladite au moins une ailette arrière (5),
dans lequel l'unité d'ailette avant (7) est reliée de manière pivotante à et supportée par la structure de liaison (6) afin de rediriger le flux d'air dans un second plan (P2) qui est perpendiculaire au premier plan (P1) ; et
dans lequel l'unité d'ailette avant (7) peut coulisser le long d'une direction de glissement (110) qui est perpendiculaire audit deuxième plan (P2), et dans lequel la structure de liaison (6) est configurée pour transférer un mouvement de glissement de l'unité d'ailette avant (7) le long de la direction de glissement (110) à un mouvement de pivotement de l'au moins une ailette arrière (5) contrôlant ainsi la redirection de l'air dans le premier plan (P1),
le diffuseur d'air interne (1) comprenant en outre un élément de commande de débit d'air (8) agencé pour faire saillie de l'unité d'ailette avant (7) en s'éloignant de l'au moins une ailette arrière (5), dans lequel ledit élément de commande de débit d'air (8) est mobile pour contrôler un débit du flux d'air éjecté du diffuseur d'air interne (1).

2. Diffuseur d'air interne (1) selon la revendication 1, dans lequel ladite unité d'ailette avant (7) est agencée pour pivoter autour d'un axe de rotation (101), ledit axe de rotation ayant une extension perpendiculaire audit deuxième plan (P2).

3. Diffuseur d'air interne (1) selon la revendication 2, dans lequel ladite unité d'ailette avant (7) est reliée à ladite structure de liaison (6) via deux brides de connexion (11) de la structure de liaison (6) qui sont reliées à des extrémités opposées de ladite unité d'ailette avant (7) le long dudit axe de rotation (101),
dans lequel chacune des deux brides de connexion (11) se couple à l'unité d'ailette avant (7) en un point de connexion, les deux points de connexion définissant ledit axe de rotation (101).

4. Diffuseur d'air interne (1) selon la revendication 3, dans lequel ladite unité d'ailette avant (7) a deux parties de réception (25) pour recevoir lesdites deux brides de connexion (11) de ladite structure de liaison (6),
dans lequel au moins l'une desdites parties de réception (25) comprend une structure de blocage (26) afin de limiter un mouvement de pivotement autour dudit axe de rotation (101).

5. Diffuseur d'air interne (1) selon la revendication 4, dans lequel au moins l'une desdites parties de réception (25) comprend une cheville de pivotement agencée pour être reçue dans une ouverture correspondante dans les brides de connexion (11).

6. Diffuseur d'air interne (1) selon la revendication 4, dans laquelle au moins une desdites parties de réception (25) comprend une ouverture adaptée pour recevoir une cheville de pivotement correspondante des brides de connexion (11).

7. Diffuseur d'air interne (1) selon l'une quelconque des revendications précédentes, dans lequel ladite unité d'ailette avant (7) comprend deux lames d'ailette (21a, 21b), et dans lequel les deux lames d'ailette (21a, 21b) sont reliées entre elles et forment ensemble un cadre d'ailette avant.

8. Diffuseur d'air interne (1) selon l'une quelconque des revendications précédentes, comprenant une pluralité d'ailettes arrière (5), les ailettes arrière (5) étant reliées par la structure de liaison (6).

9. Diffuseur d'air interne (1) selon la revendication 8, dans lequel au moins une de ladite pluralité d'ailettes arrière (5) a un premier bord qui fait face à l'unité d'ailette avant (7), et dans lequel ledit premier bord a une partie concave. (28).

10. Diffuseur d'air interne (1) pour un véhicule, comprenant :
un cadre (2) définissant une sortie d'air, ledit cadre ayant une extrémité arrière (3) pouvant être reliée à un système de ventilation pour recevoir un flux d'air et une extrémité avant (4) pour libérer le flux d'air dans le véhicule ;
au moins une ailette arrière (5) agencée dans le cadre, chaque ailette arrière (5) étant reliée de manière pivotante au cadre (2) afin de rediriger le flux d'air dans un premier plan (P1) ;
une structure de liaison (6) reliée à l'au moins une ailette arrière (5) ;
une unité d'ailette avant (7) agencée devant ladite au moins une ailette arrière (5),
dans lequel l'unité d'ailette avant (7) est reliée de manière pivotante à et supportée par la structure de liaison (6) afin de rediriger le flux d'air dans un second plan (P2) qui est perpendiculaire au premier plan (P1) ; et
dans lequel l'unité d'ailette avant (7) peut coulisser le long d'une direction de glissement (110) qui est perpendiculaire audit deuxième plan (P2), et dans lequel la structure de liaison (6) est configurée pour transférer un mouvement de glissement de l'unité d'ailette avant (7) le long de la direction de glissement (110) à un mouvement de pivotement de l'au moins une ailette arrière (5) contrôlant ainsi la redirection de l'air dans le premier plan (P1),
dans lequel ladite unité d'ailette avant (7) est agencée pour pivoter autour d'un axe de rotation (101), ledit axe de rotation (101) ayant une extension perpendiculaire audit deuxième plan (P2),
dans lequel ladite unité d'ailette avant (7) est reliée à ladite structure de liaison (6) via deux brides de connexion (11) de la structure de liaison (6) qui sont reliées aux extrémités opposées de ladite unité d'ailettes avant (7) le long dudit axe de rotation (101),
dans lequel chacune des deux brides de connexion (11) se couple à l'unité d'ailette avant (7) en un point de connexion, les deux points de connexion définissant ledit axe de rotation (101),
dans lequel ladite unité d'ailette avant (7) a deux parties de réception (25) pour recevoir lesdites deux brides de connexion (11) de ladite structure de liaison (6), et
dans lequel au moins l'une desdites parties de réception (25) comprend une structure de blocage (26) afin de limiter un mouvement de pivotement autour dudit axe de rotation (101).

11. Procédé d'assemblage d'un diffuseur d'air interne (1) pour un véhicule selon la revendication 1, ledit procédé comprenant les étapes consistant à :
fournir un cadre (2) qui définit une sortie d'air, ledit cadre ayant une extrémité arrière (3) pouvant être reliée à un système de ventilation pour recevoir un flux d'air et une extrémité avant (4) pour libérer le flux d'air dans le véhicule ;
agencer au moins une ailette arrière (5) dans le cadre (2), et relier de manière pivotante ladite au moins une ailette arrière (5) au cadre (2) ;
relier une structure de liaison (6) à l'au moins une ailette arrière (5) ;
agencer une unité d'ailette avant (7) à l'intérieur du cadre (2) devant l'au moins une ailette arrière (5), et relier l'unité d'ailette avant (7) de manière pivotante à la structure de liaison (6), de telle sorte que l'unité d'ailette avant (7) est supportée à l'intérieur du cadre (2) par la structure de liaison (6) et de telle sorte que la structure de liaison (6) transfère un mouvement de glissement de l'unité d'ailette avant (7) à un mouvement de pivotement de ladite au moins une ailette arrière (5),
dans lequel le diffuseur d'air interne (1) comprend en outre un élément de commande de débit d'air (8) agencé pour faire saillie de l'unité d'ailette avant (7) en s'éloignant de l'au moins une ailette arrière (5),
dans lequel ledit élément de commande de débit d'air (8) est mobile pour contrôler un débit du flux d'air éjecté du diffuseur d'air interne (1).

12. Procédé d'assemblage d'un diffuseur d'air interne (1) pour un véhicule selon la revendication 10, ledit procédé comprenant les étapes consistant à :
fournir un cadre (2) qui définit une sortie d'air, ledit cadre (2) ayant une extrémité arrière (3) pouvant être reliée à un système de ventilation pour recevoir un flux d'air et une extrémité avant (4) pour libérer le flux d'air dans le véhicule ;
agencer au moins une ailette arrière (5) dans le cadre (2), et relier de manière pivotante ladite au moins une ailette arrière (5) au cadre (2) ;
relier une structure de liaison (6) à l'au moins une ailette arrière (5) ;
agencer une unité d'ailette avant (7) à l'intérieur du cadre (2) devant l'au moins une ailette arrière (5), et relier l'unité d'ailette avant (7) de manière pivotante à la structure de liaison (6), de telle sorte que l'unité d'ailette avant (7) est supportée à l'intérieur du cadre (2) par la structure de liaison (6) et de telle sorte que la structure de liaison (6) transfère un mouvement de glissement de l'unité d'ailette avant (7) à un mouvement de pivotement de ladite au moins une ailette arrière (5),
dans lequel ladite unité d'ailette avant (7) est agencée pour pivoter autour d'un axe de rotation (101), ledit axe de rotation ayant une extension perpendiculaire à un plan (P2),
dans lequel ladite unité d'ailette avant (7) est reliée à ladite structure de liaison (6) via deux brides de connexion (11) de la structure de liaison (6) qui sont reliées aux extrémités opposées de ladite unité d'ailette avant (7) le long dudit axe de rotation (101),
dans lequel chacune des deux brides de connexion (11) se couple à l'unité d'ailette avant (7) en un point de connexion, les deux points de connexion définissant ledit axe de rotation (101),
dans lequel ladite unité d'ailette avant (7) a deux parties de réception (25) pour recevoir lesdites deux brides de connexion (11) de ladite structure de liaison (6), et
dans lequel au moins l'une desdites parties de réception (25) comprend une structure de blocage (26) afin de limiter un mouvement de pivotement autour dudit axe de rotation (101).
